# EUROPEAN PATENT SPECIFICATION

(11) **EP 0 482 262 B1**
(45) Date of publication and mention of the grant of the patent: **26.10.1994**
(21) Application number: 90313271.0
(22) Date of filing: 06.12.1990
(51) Int. Cl.: B60K 41/28

(54) **Automatic mechanical transmission start control system**
Startsteuerungssystem für automatisches, mechanisches Getriebe
Système de commande de démarrage pour une transmission mécanique automatique

(30) Priority: 22.10.1990 US 600657
(43) Date of publication of application: 29.04.1992
(73) Proprietor: EATON CORPORATION, Cleveland, Ohio 44114 (US)
(72) Inventor: Braun, Eugene Ralph, Royal Oak, Michigan 48037 (US)
(74) Representative: Douglas, John Andrew

(56) References cited:
- EP-A- 0 127 085
- EP-A- 0 244 096
- EP-A- 0 392 732
- DE-A- 3 612 279

## Description

### INTRODUCTION:

This invention relates generally to a vehicular automatic transmission control system effective to provide a substantially smooth start-up from a stopped or virtually stopped condition and more particularly to such control system including means for instructing the vehicle brakes to assume a predetermined partially engaged condition in combination with means for instructing a frictional coupling to establish a predetermined partially engaged condition between the transmission and the vehicle engine.

### BACKGROUND OF THE INVENTION:

A variety of approaches have been taken over the years to prevent a vehicle having an automatic transmission from creeping when in a stopped condition with the transmission in neutral with the engine running and to provide a smooth start-up from a stopped or virtually stopped condition.

A system that employs a mechanism for raising the idling speed of the engine during warm-up and also for automatically disengaging or partially disengaging the clutch when the brakes are applied at the lowest speed is described in U.S. Patent 4,105,101, the disclosure of which is incorporated herein by reference.

A somewhat similar concept is disclosed in U.S. Patent 4,194,608, of which the disclosure is incorporated herein by reference, teaches a means by which to adjust throttle position when the clutch assembly uncouples the transmission from the engine.

U.S. Patent 4,513,638, the disclosure of which is incorporated herein by reference, discloses a system that prevents the clutch from coupling the transmission to the engine when the throttle valve is in idle and the gear shift is moved from neutral to another position.

A system for reducing torque applied to an automatic transmission when the engine is idling is disclosed in U.S. Patent 4,514,811, the disclosure of which is incorporated herein by reference.

Other examples of systems for controlling creep and/or enhancing smoothness in start-up of vehicles having automatic transmissions are disclosed in U.S. Patents 4,579,202; 4,618,043; 5,698,763; 4,711,141; and 4,714,144, the disclosures of all of which are incorporated herein by reference.

Although the control systems disclosed in the above-described references may have their particular advantages, they characteristically employ means for automatically disengaging or partially engaging the clutch often in combination with some type of fuel control to maintain a desired idling speed and, although the previously described mechanism in U.S. Patent 4,105,101 utilizes partial disengagement of the vehicle brakes as a smoothing function, such is done only in conjunction with idle speed control and does not include the advantage of partial clutch engagement. EP-A-0 392 732 also did not consider these last possibilities, although representing the state of the art and disclosing the pre-characterizing portion of Claim 1.

### SUMMARY OF THE INVENTION:

It has been discovered that a balancing between the degree of clutch engagement and the amount of force applied to the brakes in combination with automatic fuel adjustment operates to great advantage in controlling creep and providing smooth start-up of vehicles employing automatic transmissions that has long been recognized by those skilled in the art.

An embodiment of this invention provides a system for controlling creep and provides smooth start-up for vehicles having automatic transmissions.

Another embodiment of this invention provides a vehicular automatic transmission control system that controls degree of brake and clutch engagement to control creep and enhance smoothness of start-up.

Another embodiment of this invention provides a vehicular automatic transmission control system that balances the degree of clutch engagement against the degree of braking in combination with automatic engine idle speed adjustment to control creep and enhance smoothness of start-up.

Yet another embodiment of this invention provides a vehicular automatic transmission control system that determines the amount of clutch engagement for starting smoothness by causing the engine speed to drop a predetermined amount with brakes automatically applied or maintained.

The invention itself is defined in Claim 1.

### BRIEF DESCRIPTION OF THE DRAWINGS:

FIGURE 1 is a schematic illustration of the components and interconnections of the automatic mechanical transmission control system of the invention; and
FIGURES 2-8 are respective schematic illustrations of alternate embodiments of the automatic mechanical transmission control system of the invention in flow chart form.

### DESCRIPTION OF SOME PREFERRED EMBODIMENTS:

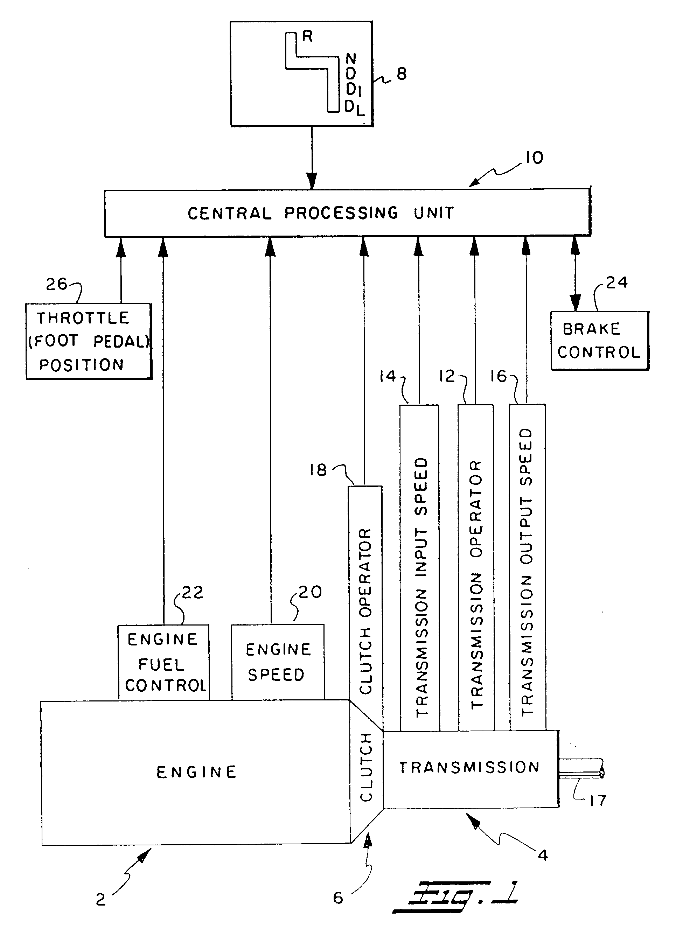

In Figure 1, a vehicular engine 2, such as an internal combustion gasoline or diesel engine, is operative to drive an output shaft 17 of an automatic mechanical transmission 4 which is selectively coupled to engine 2 by means of frictional coupling or clutch 6.

Output shaft 17 is operatively connected to the vehicle drive wheels by means of an axle differential or the like causing the wheels to rotate and move the vehicle in response to rotation of output shaft 17.

Output shaft 17 is caused to rotate when transmission 4 is coupled to engine 2 by clutch 6. The rotational speed and direction in which the output shaft 17 rotates is governed by the particular change gear ratio of transmission 4 engaged at the time.

The change gear ratio is selected by an operator by positioning a knob or the like, not shown, at R (reverse) or at progressively increasing drive ratios denoted as D_{L}, D₁, and D or in N (neutral) when so selected not to be in gear.

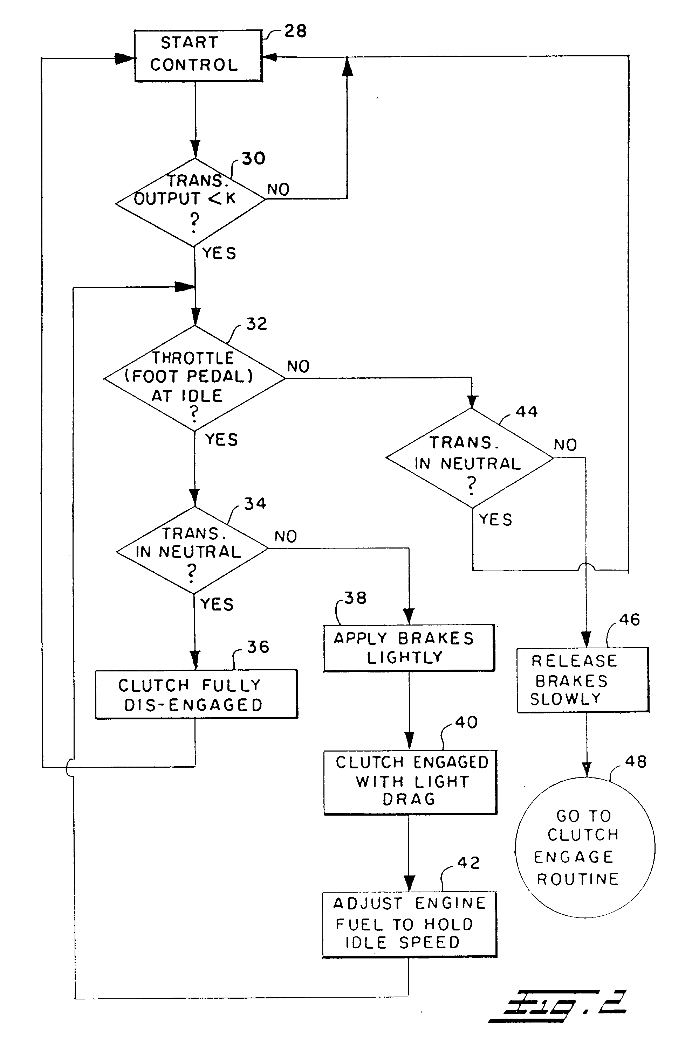

Generally, the control system of the invention is operative to prevent the vehicle from creeping when the transmission is in neutral and the engine is idling by ensuring that frictional coupling or clutch 6 is in a fully disengaged condition. Additionally, the control system of the invention is operative to ensure smooth starting conditions at vehicle speeds less then a predetermined value K hereinafter described with respect to Figures 2 - 8. The automatic partial engagement of clutch 6 with the automatic engagement of the brakes takes the backlash out of the driveline to contribute to the smoothness of the start. Additionally, the automatic release of the brakes at a predetermined rate allows for a smooth vehicle start.

The control system of the invention includes a central processing unit 10 operative to provide output signals to brake control or actuation means 24 and to effect gear ratio selections in transmission 4 as well as adjust engine fuel control 22 in addition to controlling operation of clutch 6.

In order to provide the necessary output signals, central processing unit 10 receives input signals from transmission output speed sensor 16, and from brake control 24, and from transmission input shaft speed sensor 14, as well as from engine speed sensor 20, and engine fuel control 22, and optionally from throttle foot pedal position sensor 26.

Central processing unit 10 is operative to receive and process the input signals to provide output signals operative to coordinate idle speed adjustment and the degree of brake and clutch engagement required to minimize creep and provide smooth operation at low speed.

The particular sensor employed for providing the input signals to processing unit 10 and the mechanism for controlling the degree of clutch and brake engagement are well known in the art and are therefore not described in detail herein.

Automatic and semi-automatic transmission systems of the type illustrated in Figure 1 may be seen in greater detail by reference to U.S. Patent Nos. 4,361,060; 4,595,986; 4,722,248 and 4,648,290, the disclosures of which are incorporated herein by reference.

The logic path or pattern for the control system of the invention however uniquely combines parameters heretofore not brought together in toto and is therefore described herein in detail with respect to Figures 2 through 8.

Figure 2 illustrates the logic pattern by which processing unit 10 processes various input signals to provide the output signals required to minimize creep and provide smooth driving conditions at low speeds.

Start-up control 28 is governed first in operation or step 30 by determining if vehicle speed is less than a predetermined value K, which, for example, may be 3 miles per hour.

If the answer is no, then vehicle speed is above the predetermined threshold value at which the system of the invention is operative to control.

If the answer is yes, it is determined in step 32 whether throttle foot pedal position 26 is in an idle position. If yes, it is determined in step 34 whether the transmission is in neutral. If yes, unit 10 provides an output signal operative to cause the friction coupling or clutch 6 to assume a fully disengaged condition as referenced by numeral 36.

In the event it is determined in step 34 that the transmission is not in neutral, unit 10 provides an output signal operative to cause the brake actuation means 38 to apply the brakes lightly which may be described as causing the brakes to assume a predetermined partially engaged condition.

Additionally, unit 10 provides an output signal effective to cause the clutch to engage with a light drag as referenced by numeral 40 or otherwise described as causing the clutch to assume a predetermined partially engaged condition that is adapted to smooth travel at speeds below threshold valve K by unit 10 additionally providing an output signal that is effective to adjust engine fuel as referenced by numeral 42 to hold idle speed at a predetermined value and then recycle into the logic program as indicated by the arrow presuming that the vehicle speed remains below threshold value K.

In some cases, the amount of clutch engagement is determinable by the amount of engine speed drop or by the degree of engine fuel adjustment. The clutch engagement can thus be stopped when the engine speed decreases a predetermined amount. Alternately, the clutch engagement can be stopped when the engine fuel adjustment to maintain a predetermined engine speed has reached a predetermined value.

If the engine has an idle speed governor, fuel will be adjusted to maintain idle speed and operation or step 42 would not be required in the system.

In the event it is determined in step 32 that the throttle foot pedal is not in an idle position, then it is determined in step 44 whether the transmission is in neutral and, if yes, the cycle is restarted at reference numeral 28 as shown by the arrow or, if not, unit 10 provides an output signal that, in step 46, is effective to cause the brake actuation means to release or disengage the brakes slowly or, as may be otherwise described, as at a predetermined rate after which the start control system will return to the automatic transmission clutch engagement routine of which many are known to those skilled in the art such as the routine disclosed in U.S. Patent 4,081,065, the disclosure of which is incorporated herein by reference.

Thus, the control system of the invention operates to (1) fully disengage the clutch when vehicle speed is below a threshold value K and the throttle is at idle and the transmission is in neutral and; (2) apply the brakes and clutch lightly and adjust idle speed to provide smooth operation when vehicle speed is less than predetermined threshold value K and the throttle is initially in an idle position and the transmission is not in neutral and; (3) to release the brakes slowly at a predetermined rate when applied and the vehicle speed is less than predetermined threshold value K and the throttle is not at idle and the transmission is not in neutral and then return to the clutch engagement routine as shown in Figure 2.

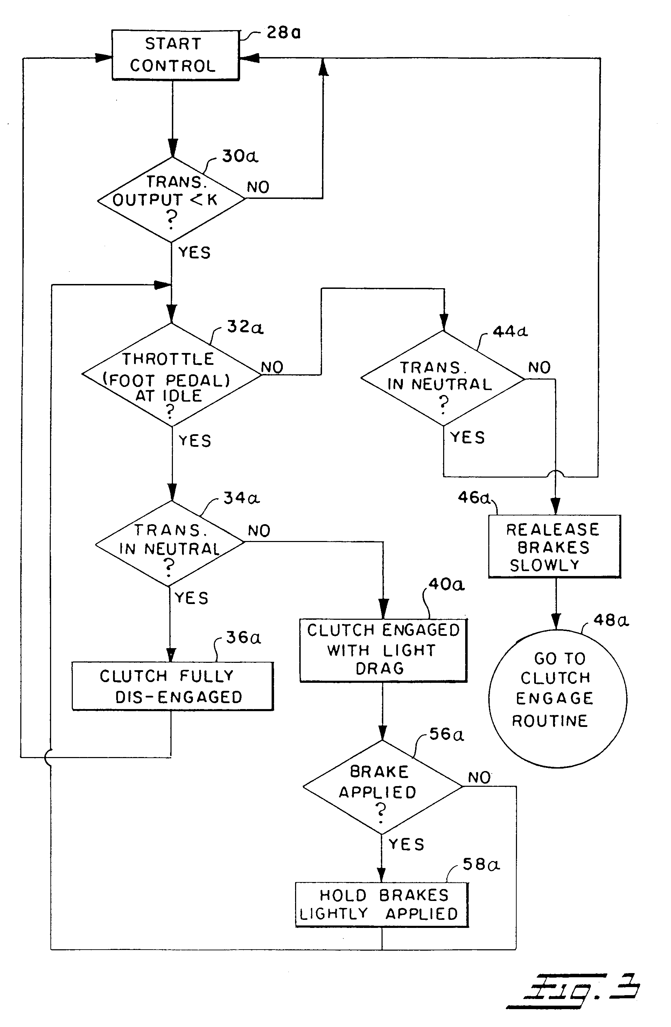

An alternative system is provided by omitting the clutch lightly applied condition at step 40 in favor of the condition that whenever the throttle foot pedal is moved from idle, the clutch is lightly applied and the brakes released slowly. Another embodiment of the control system of the invention is shown in Figure 3 in which the numerals carry the postscript "a" and in which comparison will show operates in essentially the same manner as the system of Figure 2 except that instead of the sequence of steps 38, 40 and 42, the clutch is again engaged with light drag in step 40a and a determination is made in step 56a as to whether the brakes are in engaged condition and, if yes, unit 10 provides an output signal effective to cause the brake actuation means to hold the brakes in a lightly applied condition as referenced by numeral 58a and, if not, to return to the logic program as shown by the arrow in Figure 3 unless the vehicle speed has climbed above the predetermined value K which, as previously described, is a speed preferably below about 3 miles per hour.

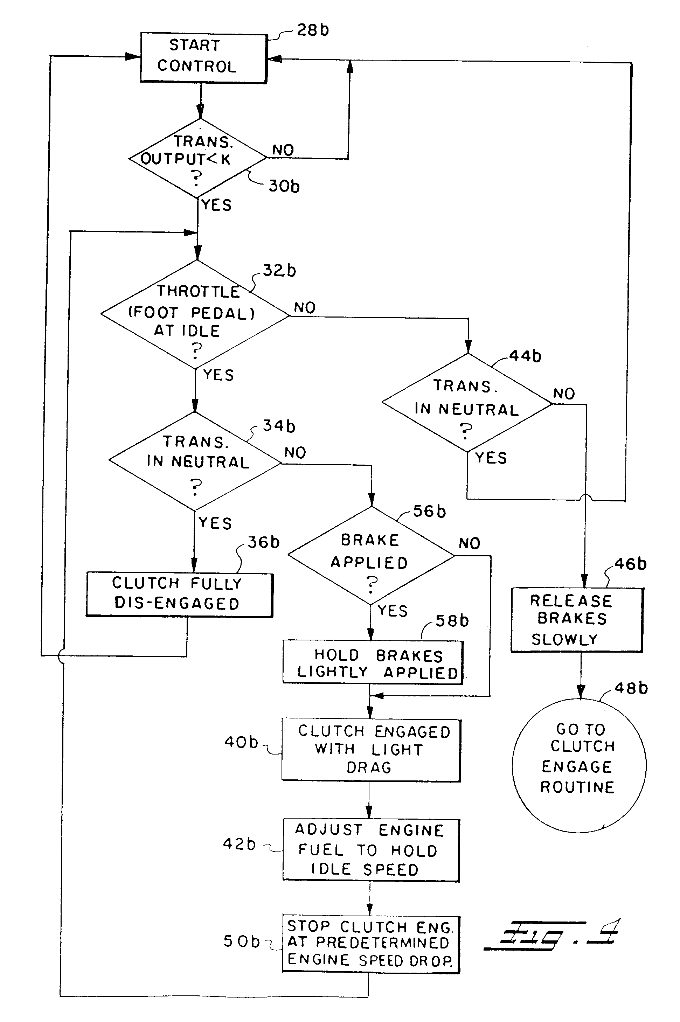

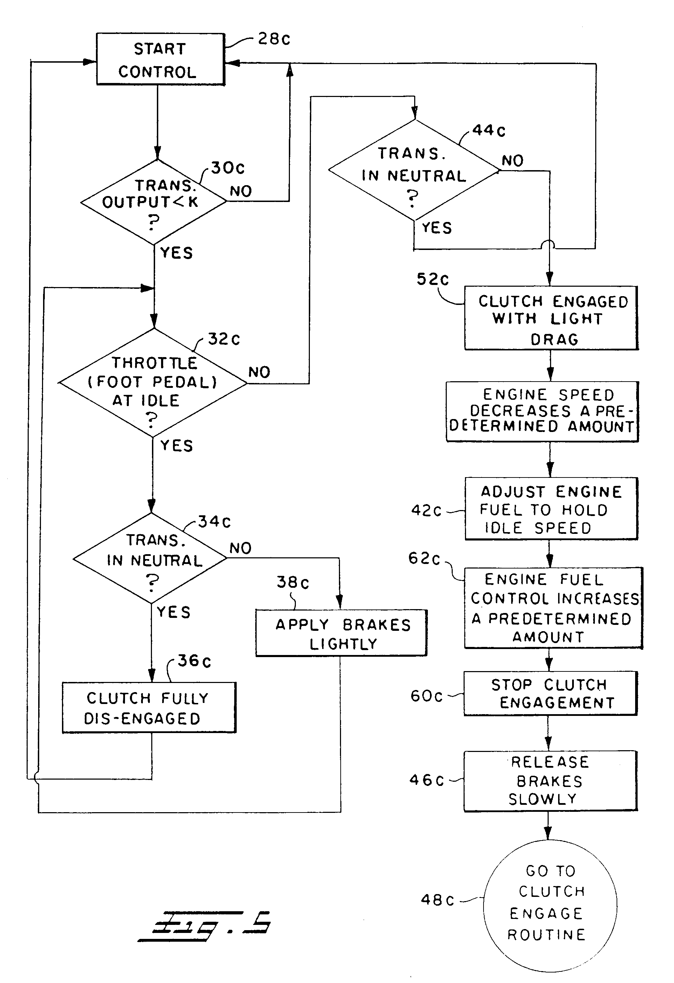

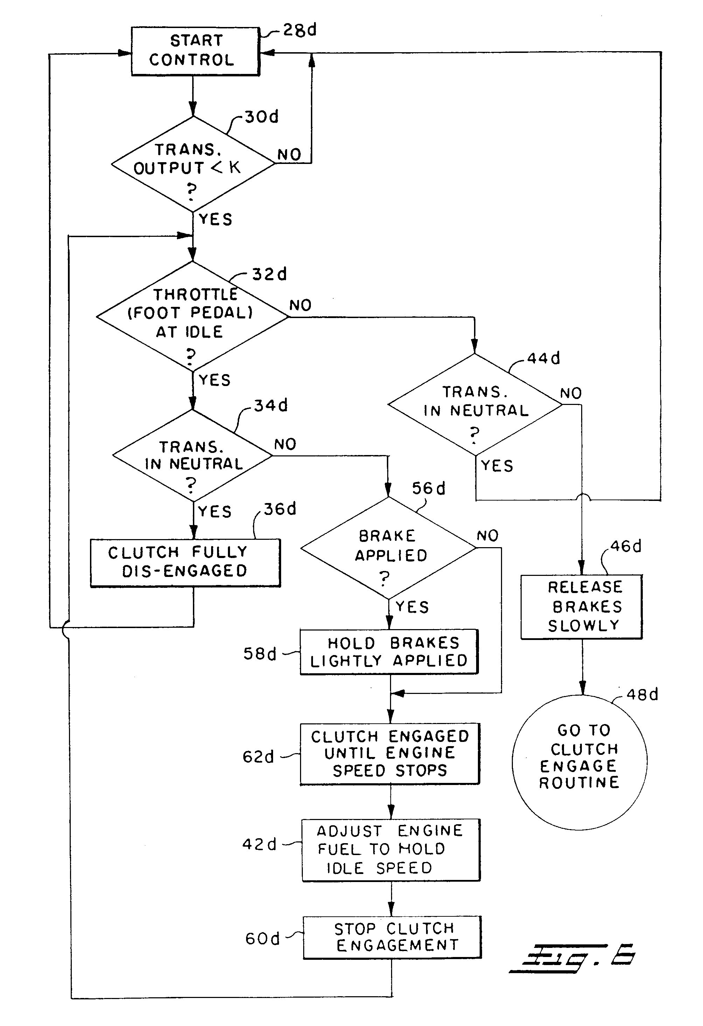

Figures 4-8 show other preferred embodiments of the control system of the invention such as in Figure 4, where the numerals include the postscript "b" and the steps are essentially the same as those shown in Figure 2 except for the addition of step 50b following step 42b in which the clutch engagement is stopped at a predetermined engine speed drop. Prior to returning the step sequence to the step referenced by numeral 32b. The steps of the process of the invention shown in Figure 5 carry the postscript "c" and are the same as Figure 2 through the step referenced by numeral 38c but instead of proceeding to step 40 as in Figure 2, is referred directly back to step 32c. Additionally, it differs from the system of Figure 2 when the transmission is determined not to be in neutral in step 44c by proceeding through the sequential steps of engaging the clutch with light drog in step 52c: decreasing the engine speed a predetermined amount in step 54c; adjusting engine fuel to hold idle spaced in step 42c; increasing engine fuel control by a predetermined amount in step 62c; stopping clutch engagement in step 60c; and then releasing the brakes slowly in step 46c; and finally returning to the clutch engage routine in step 48c. The control system shown in Figure 6, in which the steps carry the postscript "d", is similar to the control system of Figure 3, except that when the transmission is determined not to be in neutral in step 34d, a determination is made in step 56d on whether the brakes are in an applied condition and, if no, the clutch is engaged until the engine speed drops in step 62d afterwhich the engine fuel is adjusted to hold idle speed in step 42d and then the clutch engagement is stopped in step 60d before re-entering the control sequence at step 32d.

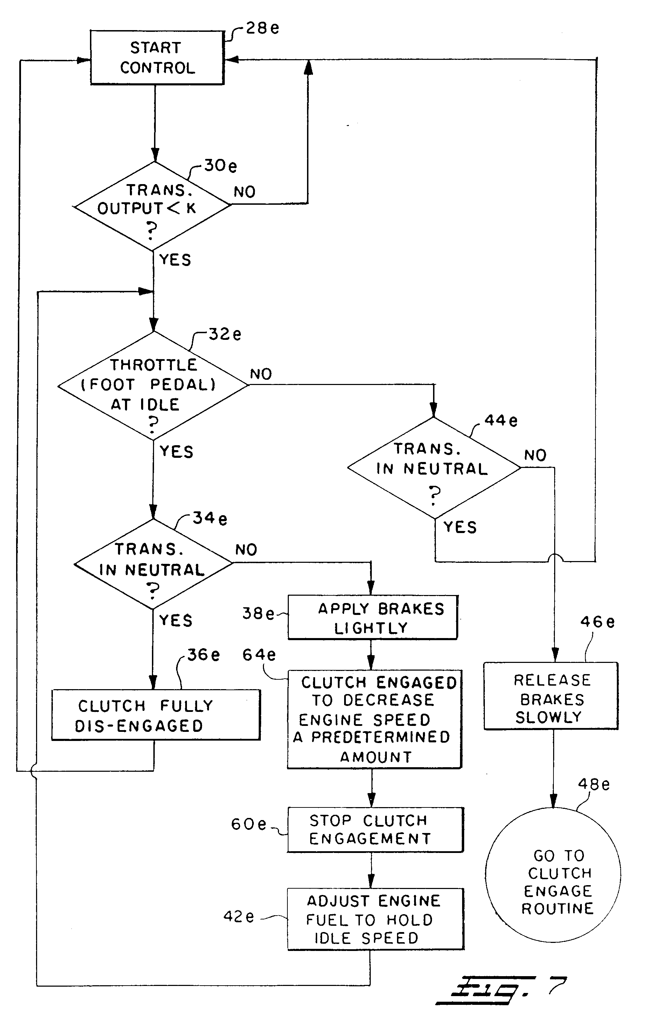

The control system of Figure 7 in which the reference numerals carry the postscript "e" is similar to the system of Figure 2 except that, after the brakes have been lightly applied in step 38e, the clutch is then engaged to decrease engine speed a predetermined amount in step 64e afterwhich the clutch engagement is then stopped in step 60e before adjusting engine fuel to hold idle speed in step 42e prior to returning to step 32e.

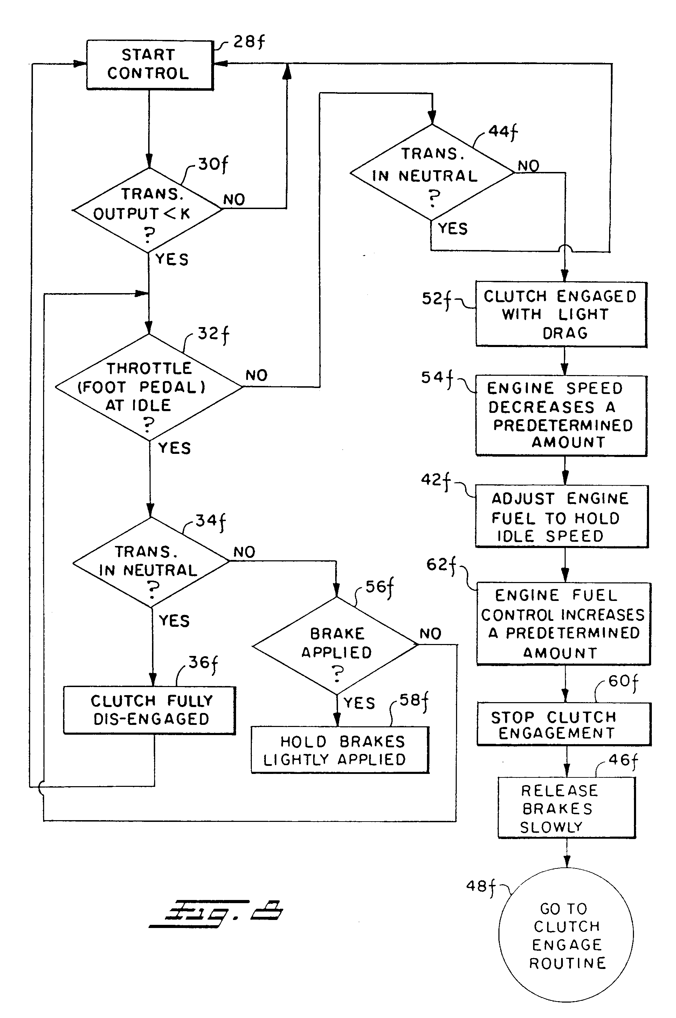

The system of Figure 8 in which the numerals carry the postscript "f" is similar to the system previously described for Figure 5 except that, when the transmission has been determined not to be in neutral in step 34f, a determination is made on whether the brakes have been applied in step 56f and, if yes, they are held in a lightly applied condition in step 58f prior to returning to step 32f and, if no, then the system returns directly to step 32f rather than to step 58f as shown in Figure 8.

Truck tractor air brake systems are well known in the art. One way to interface the start control system of the invention with the brake system is to add brake control valving to one of the foot pedal brake valve exhaust ports which are normally open when the driver takes his or her foot off the brake foot pedal connected to the brake valve. The brake control valving will normally open the brake valve exhaust port above a predetermined low vehicle speed so the brake system works in the ordinary way without interference from the start control system of the invention. Below the predetermined low vehicle speed when the start control is operative, the brake control valving of the start control system will introduce a predetermined low air pressure into one of the foot pedal brake valve exhaust ports to apply the brakes lightly when required by the start control system of the invention. If the driver wants more braking pressure he or she will get it by depressing the pedal and supplying higher brake air pressure from the brake system air supply. The start control system of the invention will not be operative until the fuel (throttle) pedal is depressed which will normally not take place until the driver has released the brake pedal. If the driver releases the pedal the brake air pressure will fall to the predetermined low air pressure until the start control system of the invention releases the brakes gradually by opening the foot pedal brake valve exhaust slowly.

Although the present invention has been set forth with a certain degree of particularity, it is understood that various modifications are possible without departing from the spirit and scope of the invention as hereinafter claimed.

## Claims

1. An automatic mechanical transmission start control system (28b) for vehicles having a throttle controlled engine, said transmission having a plurality of gear ratio combinations selectively engageable between a transmission output shaft and a transmission input shaft operatively connected to the engine by means of a selectively engageable and disengageable friction coupling actuating member, an automatic vehicle brake actuating member, an operator positional change gear selector member, including a neutral position and positions in which said gear ratio combinations are selectively engaged, and an information processing unit having means for receiving a plurality of signals including: (1) an input signal indicative of the position of said throttle control member or of the amount of fuel supplied to the engine; (2) an input signal indicative of vehicle speed; (3) an input signal indicating when the transmission is in neutral, said processing unit including means for processing said input signals and providing an output signal (30b) therefrom such that, when the vehicle speed signal is less than a predetermined value (30b), said start control system is operative such that, (i) when the transmission is in neutral (34b) and the throttle is at idle (32b) the output signal is effective to instruct the coupling actuating member to cause a friction coupling to assume a disengaged condition (34b) and (ii) when the transmission is not in neutral (34b) and the throttle is at idle (32b) and the brakes are in an engaged condition (56b), the output signal is effective to instruct the brake actuating member to cause the brakes to assume a predetermined partially engaged condition (58b) and characterized in that, (iii) when the transmission is not in neutral and the throttle is at idle and the brakes are in a disengaged condition (56b) the output signal is effective to instruct the friction coupling actuating member to cause the friction coupling to assume a predetermined partially engaged condition (40b).

2. The control system of claim 1 such that, when the throttle is at idle (32e) and the transmission is not in neutral (34e), the output signal is further effective to instruct the brake actuating member to apply the brakes lightly (38e) and to instruct the friction coupling actuating member to cause the friction member to assume an engaged condition operative to decrease the engine speed a predetermined amount (64e).

3. The control system of claim 2 wherein the output signal is further effective to instruct the friction coupling actuating member to cause the friction coupling to stop engagement.

4. The control system of claim 3 wherein the output signal is further effective to instruct the throttle control member to adjust the fuel as necessary to hold the engine at a predetermined idle speed (42e).

5. The control system of claims 2,3, or 4 further operative such that, when the throttle is not at idle, the output signal is effective to instruct the brake actuating member to cause the brakes to disengage at a predetermined rate (46e).

6. The control system of claim 5 wherein the output signal is further effective to instruct the friction coupling actuating member to cause the friction coupling to assume a fully engaged condition (48e).

7. The control system of claim 1 such that, when the throttle is at idle and the transmission is not in neutral and the brakes are in either the engaged or disengaged condition, the output signal is further effective to instruct the throttle control member to adjust the fuel as necessary to hold the engine at a predetermined idle speed (42b).

8. The control system of claim 7 wherein the output signal is further effective to instruct the friction coupling actuating member to cause the friction coupling to stop engagement at a predetermined decrease in engine speed (50b).

9. The control system of claim 7 or 8 such that, when the throttle is not at idle (32b) and the transmission is not in neutral (34b), the output signal is effective to instruct the brake actuating member to cause the brakes to disengage at a predetermined rate (46b).

10. The control system of claim 9 wherein the output signal is further effective to instruct the friction coupling actuating member to cause the friction coupling to assume a fully engaged condition (48b).

11. The control system of claim 1 such that, when the throttle is not at idle (32f) and the transmission is not in an engaged condition (44f), the output signal is effective to instruct the friction coupling actuating member to cause the friction coupling to assume a predetermined partially engaged condition (52f).

12. The control system of claim 11 wherein the output signal is further effective to instruct the throttle control member to adjust fuel as necessary to hold the engine at a predetermined idle speed (42f).

13. The control system of claim 12 wherein the output signal is further effective to instruct the throttle member to increase the amount of fuel supplied to the engine by a predetermined amount (62f).

14. The control system of claim 13 wherein the output signal is further effective to instruct the friction coupling actuating member to cause the friction coupling to assume a disengaged condition (60f).

15. The control system of claim 14 wherein the output signal is further effective to instruct the brake actuating member to cause the brakes to disengage at a predetermined rate (46f).

16. The control system of claim 15 wherein the output signal is further effective to instruct the friction coupling actuating member to cause the friction coupling to assume a fully engaged condition (48f).

17. The control system of claim 1 such that, when the throttle is at idle (32c) and the transmission is not in neutral (44c) and the brakes are in either the engaged or disengaged condition, the output signal is effective to instruct the friction coupling actuating member to cause the friction member to maintain an engaged condition (52c) until the engine speed decreases.

18. The control system of claim 14 wherein the output signal is further effective to instruct the throttle control member to adjust fuel as necessary to hold the engine at a predetermined idle speed (42d).

19. The control system of claim 18 wherein the output signal is further effective to instruct the friction coupling actuating member to cause the friction coupling to stop engagement (60d).

20. The control system of claim 17, 18, or 19 such that, when the throttle is not at idle and the transmission is not in neutral, the output signal is effective to instruct the brake actuating member to disengage the brakes at a predetermined rate (46d).

21. The control system of claim 20 wherein the output signal is further effective to instruct the friction coupling actuating member to cause the friction coupling to assume a fully engaged condition (48d).

## Patentansprüche

1. Steuersystem (28b) für automatische mechanische Getriebe für Kraftfahrzeuge mit einem kraftstoff- oder gemischgesteuerten Motor, wobei das Getriebe eine Anzahl von zwischen einer Getriebeausgangswelle und einer Getriebeeingangswelle, die über eine wahlweise ein- und ausrückbares Reibkupplungseinrichtung mit dem Motor antriebsmäßig verbunden ist, wahlweise einschaltbaren Gangstufenkombinationen, mit einem automatischen Betätigungsglied für die Fahrzeugbremse, mit einem vom Fahrer positionierbaren Auswahlglied zum Gangwechsel, das eine Leerlaufposition sowie Positionen umfaßt, in denen die Gangstufenkombinationen wahlweise eingelegt werden, und mit einer informationsverarbeitenden Einheit, die Mittel zum Empfangen einer Anzahl von Signalen einschließlich: (1) eines die Position des Drosselsteuergliedes oder die an den Motor gelieferte Kraftstoffmenge kennzeichnenden Eingangssignales; (2) eines die Fahrzeuggeschwindigkeit kennzeichnenden Signales; (3) eines Eingangssignales, das anzeigt, wenn das Getriebe in seinem Leerlauf steht, aufweist, wobei die Verarbeitungseinheit Mittel zum Verarbeiten der Eingangssignale und zum Liefern eines Ausgangssignals (30b) aus diesen aufweist, so daß, wenn das Fahrzeuggeschwindigkeitssignal kleiner als ein vorbestimmter Wert (30b) ist, das Steuersystem derart wirkt, daß (i), wenn das Getriebe im Leerlauf (34b) und das Gaspedal im Leerlauf (32b) stehen, das Ausgangssignal dazu dient, das Kupplungsbetätigungsglied anzuweisen, eine Reibkupplungseinrichtung zu veranlassen, einen ausgerückten Zustand (34b) anzunehmen, und, (ii) wenn das Getriebe nicht im Leerlauf (34b) und das Gaspedal im Leerlauf (32b) steht sowie die Bremsen in betätigtem Zustand (56b) befindlich sind, dient das Ausgangssignal dazu, das Bremsbetätigungsglied anzuweisen, die Bremsen zu veranlassen, einen vorbestimmten, teilweise betätigten Zustand (58b) anzunehmen, und es ist dadurch gekennzeichnet, daß (iii) wenn das Getriebe nicht im Leerlauf und das Gaspedal im Leerlauf steht und die Bremsen einen nicht betätigten Zustand (56b) haben, das Ausgangssignal dazu dient, dem die Reibkupplungseinrichtung betätigenden Glied zu befehlen, die Reibkupplungseinrichtung zu veranlassen, einen vorbestimmten teilweise eingekuppelten Zustand (40b) anzunehmen.

2. Steuersystem nach Anspruch 1, bei dem, wenn das Gaspedal im Leerlauf (32e) und das Getriebe nicht im Leerlauf (34e) steht, das Ausgangssignal außerdem dazu dient, dem Bremsbetätigungsglied zu befehlen, die Bremsen leicht (38e) zu betätigen und dem die Reibkupplungseinrichtung betätigenden Glied zu befehlen, die Reibkupplungseinrichtung zu veranlassen, eine eingerückte Position anzunehmen, die ein Vermindern der Motordrehzahl um einen vorbestimmten Wert (64e) bewirkt.

3. Steuersystem nach Anspruch 2, bei dem das Ausgangssignal außerdem dazu dient, dem die Reibkupplungseinrichtung betätigenden Glied zu befehlen, das Stoppen des Eingriffs der Reibkupplungseinrichtung zu bewirken.

4. Steuersystem nach Anspruch 3, bei dem das Ausgangssignal außerdem dazu dient, dem Kraftstoffzumessungs- oder Gemischsteuerglied zu befehlen, die Kraftstoffmenge so einzustellen, wie es erforderlich ist, um die Motordrehzahl bei einem vorbestimmten Leerlaufdrehzahlwert (42e) zu halten.

5. Steuersystem nach den Ansprüchen 2, 3 oder 4, das außerdem derart arbeitet, daß, wenn das Gaspedal nicht im Leerlauf steht, das Ausgangssignal dazu dient, den Bremsbetätigungsgliedern zu befehlen, die Bremsen zu veranlassen, sich mit einer vorbestimmten Geschwindigkeit zu lösen (46e).

6. Steuersystem nach Anspruch 5, bei dem das Ausgangssignal außerdem dazu dient, dem die Reibkupplungseinrichtung betätigenden Glied zu befehlen, die Reibkupplungseinrichtung zu veranlassen, einen ganz eingekuppelten Zustand (48e) einzunehmen.

7. Steuersystem nach Anspruch 1, das so beschaffen ist, daß wenn das Gaspedal im Leerlauf und das Getriebe nicht in dem Leerlauf steht und die Bremsen entweder in dem betätigten oder in dem nicht betätigten Zustand sind, das Ausgangssignal außerdem dazu dient, dem Drosselsteuerglied zu befehlen, die Kraftstoffmenge so einzustellen, wie es erforderlich ist, um die Motordrehzahl bei einem vorbestimmten Drehzahlwert (42b) zu halten.

8. Steuersystem nach Anspruch 7, bei dem das Ausgangssignal außerdem dazu dient, dem die Reibkupplungseinrichtung betätigenden Glied zu befehlen, die Reibkupplungseinrichtung zu veranlassen, das Einkuppeln bei einem vorbestimmten Abfall der Motordrehzahl (50b) zu stoppen.

9. Steuersystem nach Anspruch 7 oder 8, das derart beschaffen ist, daß, wenn das Gaspedal nicht im Leerlauf (32b) und das Getriebe nicht im Leerlauf (34b) steht, das Ausgangssignal dazu dient, dem Bremsbetätigungsglied zu befehlen, die Bremsen zu veranlassen, sich mit einer vorbestimmten Geschwindigkeit (46b) zu lösen.

10. Steuersystem nach Anspruch 9, bei dem das Ausgangssignal außerdem dazu dient, dem die Reibkupplungseinrichtung betätigenden Glied zu befehlen, die Reibkupplungseinrichtung zu veranlassen, einen voll eingekuppelten Zustand (48b) anzunehmen.

11. Steuersystem nach Anspruch 1, das so beschaffen ist, daß, wenn das Gaspedal nicht im Leerlauf (32f) und das Getriebe nicht in einem Zustand (44f), bei dem ein Gang eingelegt ist, steht, das Ausgangssignal dazu dient, dem die Reibkupplungseinrichtung betätigenden Glied zu befehlen, die Reibkupplungseinrichtung zu veranlassen, einen vorbestimmten teilweise eingekuppelten Zustand (52f) anzunehmen.

12. Steuersystem nach Anspruch 11, bei dem das Ausgangssignal außerdem dazu dient, das Drosselsteuerglied so einzustellen, wie es erforderlich ist, um den Motor bei einer vorbestimmten Leerlaufdrehzahl (42f) zu halten.

13. Steuersystem nach Anspruch 12, bei dem das Ausgangssignal außerdem dazu dient, dem Drosselsteuerglied zu befehlen, die an den Motor gelieferte Kraftstoffmenge um einen vorbestimmten Wert (62f) zu erhöhen.

14. Steuersystem nach Anspruch 13, bei dem das Ausgangssignal außerdem dazu dient, dem die Reibkupplungseinrichtung betätigenden Glied zu befehlen, die Reibkupplungseinrichtung zu veranlassen, einen ausgekuppelten Zustand (60f) anzunehmen.

15. Steuersystem nach Anspruch 14, bei dem das Ausgangssignal außerdem dazu dient, dem Bremsbetätigungsglied zu befehlen, die Bremsen zu veranlassen, sich mit einer vorbestimmten Geschwindigkeit (46f) zu lösen.

16. Steuersystem nach Anspruch 15, bei dem das Ausgangssignal außerdem dazu dient, dem die Reikupplungseinrichtung betätigenden Glied zu befehlen, die Reibkupplungseinrichtung zu veranlassen, einen ganz eingekuppelten Zustand (48f) anzunehmen.

17. Steuersystem nach Anspruch 1, das so beschaffen ist, daß, wenn das Gaspedal im Leerlauf (32c) und das Getriebe nicht in einem Leerlauf (44c) steht und die Bremsen in entweder dem betätigten oder nicht betätigten Zustand sind, das Ausgangssignal dazu dient, dem die Reibkupplungseinrichtung betätigenden Glied zu befehlen, die Reibkupplungseinrichtung zu veranlassen, einen eingekuppelten Zustand (52c) beizubehalten, bis sich die Motordrehzahl verringert.

18. Steuersystem nach Anspruch 14, bei dem das Ausgangssignal außerdem dazu dient, dem Kraftstoffsteuerglied zu befehlen, die Kraftstoffmenge so einzustellen, wie es erforderlich ist, um den Motor bei einer vorbestimmten Leerlaufdrehzahl (42e) zu halten.

19. Steuersystem nach Anspruch 18, bei dem das Ausgangssignal außerdem dazu dient, dem die Reibkupplungseinrichtung betätigenden Glied zu befehlen, die Reibkupplungseinrichtung zu veranlassen, das Einkuppeln zu stoppen (60d).

20. Steuersystem nach Anspruch 17, 18 oder 19, das so beschaffen ist, daß wenn das Gaspedal nicht im Leerlauf und das Getriebe nicht im Leerlauf steht, das Ausgangssignal dazu dient, dem Bremsbetätigungsgiied zu befehlen, die Bremsen mit einer vorbestimmten Geschwindigkeit zu lösen (46d).

21. Steuersystem nach Anspruch 20, bei dem das Ausgangssignal außerdem dazu dient, dem die Reibkupplungseinrichtung steuernden Glied zu befehlen, die Reibkupplungseinrichtung zu veranlassen, einen voll eingekuppelten Zustand (48d) anzunehmen.

## Revendications

1. Système de commande de démarrage (28b) pour une transmission mécanique automatique de véhicule comportant un moteur commandé par accélérateur, ladite transmission comprenant plusieurs combinaisons de rapports pouvant être sélectivement engagés entre un arbre de sortie de transmission et un arbre d'entrée de transmission accouplé fonctionnellement au moteur au moyen d'un élément d'actionnement d'embrayage à friction pouvant être sélectivement embrayé et débrayé, un élément d'actionnement automatique de freins du véhicule, un élément de sélection de rapports actionné par le conducteur et comprenant une position de point mort et des positions dans lesquelles lesdites combinaisons de rapports sont sélectivement engagées, ainsi qu'une unité de traitement d'informations comportant des moyens pour recevoir plusieurs signaux comprenant : (1) un signal d'entrée indiquant la position dudit élément de commande d'accélérateur ou de la quantité de carburant fourni au moteur ; (2) un signal d'entrée indiquant la vitesse du véhicule ; (3) un signal d'entrée indiquant quand la transmission se trouve au point mort, ladite unité de traitement comprenant des moyens pour traiter lesdits signaux d'entrée et pour produire à partir de ceux-ci un signal de sortie (30b) de telle sorte que, quand le signal de vitesse de véhicule est inférieur à une valeur prédéterminée (30b), ledit système de commande de démarrage opère de telle sorte que, (i) quand la transmission se trouve au point mort (34b) et quand l'accélérateur se trouve au ralenti (32b), le signal de sortie fournisse une instruction à l'élément d'actionnement d'embrayage pour faire passer l'embrayage à friction dans une condition débrayée (34b) et (ii), quand la transmission ne se trouve pas au point mort (34b) et quand l'accélérateur se trouve au ralenti (32b) et que les freins se trouvent dans une condition serrée (56b), le signal de sortie fournisse une instruction à l'élément d'actionnement de freins pour faire passer les freins dans une condition prédéterminée de serrage partiel (58b), et le système est caractérisé en ce que, (iii) quand la transmission ne se trouve pas au point mort, quand l'accélérateur se trouve au ralenti et quand les freins sont dans une condition de desserrage (56b), le signal de sortie agisse de façon à transmettre une instruction à l'élément d'actionnement d'embrayage à friction pour faire passer cet embrayage à friction dans une condition prédéterminée d'embrayage partiel (40b).

2. Système de commande selon la revendication 1, opérant de telle sorte que, quand l'accélérateur se trouve au ralenti (32e) et quand la transmission ne se trouve pas au point mort (34e), le signal de sortie agisse en outre pour fournir une instruction à l'élément d'actionnement de freins pour produire un léger serrage des freins (38e) et pour fournir une instruction à l'élément d'actionnement d'embrayage à friction pour faire passer cet embrayage à friction dans une condition d'embrayage opérant pour réduire la vitesse du moteur d'une valeur prédéterminée (64e).

3. Système de commande selon la revendication 2, dans lequel le signal de sortie agit en outre pour fournir une instruction à l'élément d'actionnement d'embrayage à friction afin d'arrêter la condition d'embrayage de ce dernier.

4. Système de commande selon la revendication 3, dans lequel le signal de sortie agit en outre pour fournir une instruction à l'élément de commande d'accélérateur pour régler la quantité de carburant juste nécessaire pour maintenir le moteur à une vitesse de ralenti prédéterminée (42e).

5. Système de commande selon les revendications 2, 3 ou 4, agissant en outre de telle sorte que, quand l'accélérateur ne se trouve pas au ralenti, le signal de sortie agisse pour fournir une instruction à l'élément d'actionnement de freins afin de produire un desserrage des freins à une allure prédéterminée (46e).

6. Système de commande selon la revendication 5, dans lequel le signal de sortie agit en outre pour fournir une instruction à l'élément d'actionnement d'embrayage à friction afin de faire passer cet embrayage à friction dans une condition d'embrayage complet (48e).

7. Système de commande selon la revendication 1, opérant de telle sorte que, quand l'accélérateur ne se trouve pas au ralenti, quand la transmission ne se trouve pas au point mort et quand les freins se trouvent soit dans la condition de serrage soit dans la condition de desserrage, le signal de sortie agisse en outre pour fournir une instruction à l'élément de commande d'accélérateur pour régler la quantité de carburant nécessaire pour maintenir le moteur à une vitesse de ralenti prédéterminée (42b).

8. Système de commande selon la revendication 7, dans lequel le signal de sortie agit en outre de façon à fournir une instruction à l'élément d'actionnement d'embrayage à friction pour arrêter la condition d'embrayage de cet embrayage à friction lors d'une diminution prédéterminée de la vitesse du moteur (50b).

9. Système de commande selon la revendication 7 ou 8, opérant de telle sorte que, quand l'accélérateur ne se trouve pas au ralenti (32b) et quand la transmission ne se trouve pas au point mort (34b), le signal de sortie agisse pour fournir une instruction à l'élément d'actionnement de freins afin de produire un desserrage des freins à une allure prédéterminée (46b).

10. Système de commande selon la revendication 9, dans lequel le signal de sortie agit en outre pour fournir une instruction à l'élément d'actionnement d'embrayage à friction afin de faire prendre à cet embrayage à friction une condition d'embrayage complet (48b).

11. Système de commande selon la revendication 1, opérant de telle sorte que, quand l'accélérateur n'est pas au ralenti (32f) et quand la transmission n'est pas en prise (44f), le signal de sortie agisse pour fournir une instruction à l'élément d'actionnement d'embrayage à friction pour faire prendre à cet embrayage à friction une condition prédéterminée d'embrayage partiel (52f).

12. Système de commande selon la revendication 11, dans lequel le signal de sortie agit en outre pour fournir une instruction à l'élément de commande d'accélérateur en vue d'un réglage de la quantité de carburant nécessaire pour maintenir le moteur à une vitesse de ralenti prédéterminée (42f).

13. Système de commande selon la revendication 12, dans lequel le signal de sortie agit en outre pour fournir une instruction à l'élément de commande d'accélérateur afin d'augmenter la quantité de carburant fournie au moteur d'une valeur prédéterminée (62f).

14. Système de commande selon la revendication 13, dans lequel le signal de sortie agit en outre pour fournir une instruction à l'élément d'actionnement d'embrayage à friction pour faire prendre à cet embrayage à friction une condition débrayée (60f).

15. Système de commande selon la revendication 14, dans lequel le signal de sortie agit en outre pour fournir une instruction à l'élément d'actionnement de freins afin de produire un desserrage des freins à une allure prédéterminée (46f)

16. Système de commande selon la revendication 15, dans lequel le signal de sortie agit en outre pour fournir une instruction à l'élément d'actionnement d'embrayage à friction pour faire prendre à l'embrayage à friction une condition d'embrayage complet (48f).

17. Système de commande selon la revendication 1, opérant de telle sorte que, quand l'accélérateur n'est pas au ralenti (32c), quand la transmission n'est pas au point mort (44c) et également quand les freins se trouvent soit dans la condition de serrage, soit dans la condition de desserrage, le signal de sortie agisse pour fournir une instruction à l'élément d'actionnement d'embrayage à friction pour faire en sorte que cet embrayage à friction conserve une condition embrayée (52c) jusqu'à ce que la vitesse du moteur diminue.

18. Système de commande selon la revendication 14, dans lequel le signal de sortie agit en outre de façon à fournir une instruction à l'élément de commande d'accélérateur pour régler la quantité nécessaire de carburant pour maintenir le moteur à une vitesse de ralenti prédéterminée (42d).

19. Système de commande selon la revendication 18, dans lequel le signal de sortie agit en outre pour fournir une instruction à l'élément d'actionnement d'embrayage à friction afin d'arrêter la condition d'embrayage de cet embrayage à friction (60d).

20. Système de commande selon les revendications 17, 18 ou 19, opérant de telle sorte que, quand l'accélérateur n'est pas au ralenti et quand la transmission ne se trouve pas au point mort, le signal de sortie agisse pour fournir une instruction à l'élément d'actionnement de freins en vue de desserrer les freins à une allure prédéterminée (46d).

21. Système de commande selon la revendication 20, dans lequel le signal de sortie agit en outre pour fournir une instruction à l'élément d'actionnement d'embrayage à friction pour faire passer cet embrayage à friction dans une condition d'embrayage complet (48d).
